# EUROPEAN PATENT APPLICATION

(11) **EP 4 418 186 A1**
(43) Date of publication of application: **21.08.2024**
(21) Application number: 24158052.1
(22) Date of filing: 16.02.2024
(51) Int. Cl.: G06Q 20/02, G06Q 20/22, G06Q 20/24, G06Q 40/03

(54) **SYSTEM, METHOD AND APPARATUS FOR PREVENTING INSUFFICIENT FUNDS RETURNS IN FINANCIAL TRANSACTION PROCESSING**

(30) Priority: 20.02.2023 US 202318111668
(71) Applicant: Affirm, Inc., San Francisco, CA 94108 (US)
(72) Inventor: BACKMAN, Johan, San Francisco, 94108 (US); LOVELY, Ned Jackson, San Francisco, 94108 (US); DUGGAN, Laurence, San Francisco, 94108 (US)
(74) Representative: Piotrowicz, Pawel Jan Andrzej

(57) **Abstract**

A method for facilitating minimization of insufficient funds returns for ACH transfers associated with transactions may include receiving an account status associated with a bank account of a customer having a value card associated with financial transactions from the bank account, receiving status update information including account transaction data and/or user profile information associated the bank account of the customer, modifying the account status to determine an estimated account balance for the bank account based on the status update information, receiving an indication of a financial transaction involving the value card between the customer and a merchant and for which an ACH request is to be issued with respect to the bank account, employing responsive to the indication of the financial transaction a scoring algorithm based on the estimated account balance and an amount of the financial transaction to determine a success score indicative of a likelihood of avoiding an insufficient funds return for the ACH request, and determining based on the success score whether to approve the financial transaction.

## Description

### TECHNICAL FIELD

Example embodiments generally relate to financial industry technologies and, in particular, relate to apparatuses, systems, and methods for providing technical tools to monitor and act to avoid the generation of insufficient funds returns in connection with financial transactions.

### BACKGROUND

The financial industry is comprised of many thousands of customers, vendors, lenders, borrowers, and other role players that all interact in various ways to enable customers to ultimately have access to goods and services provided by vendors. Credit and financial transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions. More recently, installment loan financing has become a popular option.

Credit cards and certain other lending vehicles may be useful tools for many customers. However, some customers can find themselves over extended either quickly or over a period of time based on the existing tools. This phenomenon has repeated itself over generations, and for millions of customers. Thus, there is now a deep desire on the part of many to create flexible and fair means of supporting customer purchasing activities that is both honest and transparent, and that also improves the lives of customers.

Installment loans, or buy now, pay later financing, have become a popular tool in relation to addressing the issues noted above. However, even this popular tool typically gets employed at the time a purchase is being undertaken. For example, the customer may select a product of interest and proceed to checkout (virtually or at a brick and mortar store) to purchase the product. The payment means selected to pay the merchant for the product may be a physical or virtual card that is linked to accounts that enable an installment loan to be granted to the customer, and funds may be transferred to the merchant on behalf of the customer for purchase of the product, if the customer is approved for the installment loan.

In other cases, such as when a value card (e.g., a credit or debit card) is presented by a customer for payment at checkout, the decision making progress regarding whether to support the transaction must be made very quickly, and the algorithms and policies that are involved may include account balances or checks that cannot necessarily be instantaneously done, or appreciated to be fully accurate since other transactions, or even a series of transactions, may have been made since the latest information available for review can be obtained. These situations may create risk for the issuer of the value card, and may also result in undesirable negative impacts on the customer. Additionally, users may want a value card that is functionally dynamic supporting pay now transactions or installment loan transactions, which the user has the ability to dictate via an app or otherwise.

One example of a situation in which a user (i.e., a customer and potential borrower) may suffer in relation to delays that are inherent in the system may arise in the context of transactions involving enabling Automated Clearing House (ACH) transfers or payments. ACH payments are a form of electronic bank transaction made using a network (i.e., the ACH network) that is formed from a system of computers that communicate with each other to make and receive payments. For each transaction there is one computer at the sending end to send a request for payment, and another computer at the receiving end to accept the request. Whereas many customers may imagine that a financial transaction somehow transfers money directly from their accounts into the corresponding accounts of merchants, that is typically not the case. Instead, the card issuer or related entity (as described in more detail below) may transfer money from an account on behalf of the customer to the vendor to support the transaction, and then the card issuer may request an ACH transfer from the customer account to cover the transaction.

Although fairly standard as a method of transferring money, the movement of the money using ACH is relatively slow. In this regard, a lender or bank or related finance company may submit a file containing all of the transfers that are to be performed to initiate the process, but there is generally no confirmation received through the system to indicate whether or not each transaction has gone through successfully. The only communication received from the system is generally received in the event of a failure for either insufficient funds or an account being closed, for example. Moreover, even notifications of failed ACH transfers may take 1 to 2 business days to be received.

The fact that there is no confirmation for successful transfers can create a problem for a card user (and consequently for a card issuer) since it is not clear what the current status of the user (or customer) account(s) may be at the time a transaction needs to be made. The card issuer must therefore balance the risk of floating money to a customer against the uncertainty of the accuracy of account information. Should the card issuer decide to take the risk in a situation where the customer has had intervening transactions taking money from his/her account that causes an ACH transfer to fail, both the customer and the card issuer may receive financial penalties in the form of failed transfer fees.

In at least some cases, these fees may be avoidable, and such avoidance is highly desirable for the customer and the card issuer. The persistence of such a desirable problem to eliminate exists due to the fact that there are presently no technical means to be sure that perfect information on account status is being reviewed when decisions are being made. While that level of perfection is not likely to be achieved in the short term, and until such a solution can be provided, perhaps other technical means may be instantiated to alleviate the problem noted above. Example embodiments aim precisely at doing this.

As can likely be appreciated from the description above, the potential for receiving failed ACH transfer notification can be very frustrating and costly for users. Moreover, causing user frustration can dissuade users from establishing loyalty to any particular brand or service. Given that the nature of ACH transfers is outside the control of the card issuer (or lender), the card issuer or lender must consider other creative options for improving the situation described above that are fully within the control of the card issuer or lender. Accordingly, some example embodiments may enable the provision of technical means by which to provide a more trustworthy and accurate way to handle transactions involving account status determinations and ACH payments.

### BRIEF SUMMARY OF SOME EXAMPLES

In an example embodiment, a method for facilitating minimization of insufficient funds returns for automated clearing house (ACH) transfers associated with transactions may be provided. The method may include receiving an account status associated with a bank account of a customer having a value card associated with financial transactions from the bank account, receiving status update information including account transaction data and/or user profile information associated the bank account of the customer, modifying the account status to determine an estimated account balance for the bank account based on the status update information, receiving an indication of a financial transaction involving the value card between the customer and a merchant and for which an ACH request is to be issued with respect to the bank account, employing responsive to the indication of the financial transaction a scoring algorithm based on the estimated account balance and an amount of the financial transaction to determine a success score indicative of a likelihood of avoiding an insufficient funds return for the ACH request, and determining based on the success score whether to approve the financial transaction.

In another example embodiment, an apparatus for facilitating minimization of insufficient funds returns for automated clearing house (ACH) transfers associated with transactions may be provided. The apparatus may include processing circuitry configured for receiving status update information including account transaction data and/or user profile information associated the bank account of the customer, modifying the account status to determine an estimated account balance for the bank account based on the status update information, receiving an indication of a financial transaction involving the value card between the customer and a merchant and for which an ACH request is to be issued with respect to the bank account, employing responsive to the indication of the financial transaction a scoring algorithm based on the estimated account balance and an amount of the financial transaction to determine a success score indicative of a likelihood of avoiding an insufficient funds return for the ACH request, and determining based on the success score whether to approve the financial transaction.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for preventing insufficient funds returns of ACH transactions according to an example embodiment;
FIG. 2 illustrates a functional block diagram of a payments platform according to an example embodiment;
FIG. 3 illustrates a block diagram showing control flow associated with preventing insufficient funds returns of ACH transactions in accordance with an example embodiment;
FIG. 4 illustrates a block diagram showing system interactions in accordance with an example embodiment; and
FIG. 5 illustrates a block diagram of a method for facilitating minimization of insufficient funds returns of automated clearing house (ACH) transfers associated with transactions in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a payments platform that can be instantiated at an apparatus comprising configurable processing circuitry, and which may process various pay now, or debit, or other financial transactions. The processing circuitry may be configured to execute various processing functions on financial data using the techniques described herein. The payments platform may, for example, be configured to provide a way to determine, on an individual user-level basis, whether to approve a financial transaction for a user based on execution of a determination of the likelihood of receiving an insufficient funds (NSF) return of an ACH transfer associated with the potential transaction (or future transactions). Thus, for example, a prediction of whether an NSF return is likely may be made using technical tools provided by example embodiments. This prediction may, in some cases, take the form of a success score (or likelihood score) that represents how likely the ACH transfer is to succeed in avoiding an NSF return (and therefore result in a successful ACH transfer.

The success score, if it is to be calculated, must have both a technical actor to calculate it, but must further be generated based on inputs that are both capable of being received (again from a technical perspective) and are germane to determining a useful or accurate indication of such likelihood.

On the germane side of this requirement, the most helpful information in determining whether an NSF return is likely generally relates to indications of current account status or recent account activity. In this regard, a check on account status may be updated or retrieved at a specific time, and may be indicative of all settled transactions (e.g., deposits and withdrawals) that have been completed (but not necessarily initiated) at the time of the status check. Planned or unplanned withdrawals (or deposits) that occur immediately after the status check, but before the time of a given financial transaction may all influence whether the account has sufficient funds to cover the transaction when the ACH transfer that is associated with the given transaction finally gets handled (as noted above within a few days of the transaction). Thus, it would be preferable to have more frequent updates regarding the activities of an account that is associated with transaction activity.

In order to accomplish this, example embodiments may employ account updates associated with user activity performed by the card issuer (or related entity) with the given user, and also directly from the bank or account of the user. In this regard, for example, the bank (and in fact many banks) may provide account transaction data that can be parsed or studied to determine more recent account status information for a given user's account. This provides a technical input that is provided (or can be provided) by banks, and therefore is technically feasible to receive, but such data can also be used intelligently to determine a likely account status. Both of these aspects are helpful in gaining a more up to date feel for account status, but that is only a start to defining a truly useful solution.

Using the account transaction data to determine a likely account status (or account balance) is very important, as noted above. Moreover, using just that basic tool, a simple solution may be to call the estimated account balance determined using the account transaction data as a minimum threshold value for approving financial transactions. Thus, for example, if the last account check showed a balance of $200 and the account transaction data suggests that $100 may have been committed to other purchases and may be expected to be deducted from the account balance before any ACH transfer associated with a current financial transaction can be approved, then the limit for the current financial transaction may be $ 100. To be safe, perhaps a safety margin (either associated with a minimum dollar value or a percentage of the balance (e.g., $20 or 20%) may be initiated, and the maximum financial transaction that can be approved may be $80.

However, in either case, the user may be disappointed to have a transaction declined, and brand loyalty, customer satisfaction, and even merchant satisfaction with any association with the card issuer (or transaction facilitator) may be eroded. Whereas, of course, the alternative would be to accept more risk (and potentially more NSF return fees for the user and card issuer/facilitator), further strategic initiative and technical tools may yet improve the situation even more.

Accordingly, for example, some example embodiments may not only determine a likelihood or success score that considers the current account balance as the target value for consideration with respect to determining if an ACH pull or transfer request will be successful for the full amount of the financial transaction, but likelihood or success scores could be calculated on smaller or partitioned portions of the current financial transaction so that consideration may be given to breaking up ACH transfer requests for the current transaction into smaller, spaced apart requests that are more likely to be capable of being successful (or in other words, that aren't likely to be unsuccessful resulting in NSF fee for the user, etc.). In short, example embodiments may further provide for a capability to strategically partition one financial transaction in two smaller, separate transactions processed at varying times for the avoidance of NSF returns. However, the technical tools described herein may add yet further technical tools for warning the user when the odds of an NSF return are high to enable the user to remedy the situation, either by making further deposits or by taking a short term loan to increase the amount that can be approved in a financial transaction.

Thus, example embodiments may not only enable the user to obtain support for a financial transactions when others may not grant it (without an appreciable or unacceptable increase in risk to the payment platform, facilitator, or lender), but the user may be incented to exhibit brand loyalty to the card issuer (or transaction facilitator) and build additional payment or financial opportunities and expect more consistency in approval of transaction requests.

As noted above, the normal ACH processing activities, and their respective timings, can leave a user who recently engaged in a transaction that involved an ACH transfer exposed to a window of vulnerability receiving an NSF return on further transactions, since there is no positive confirmation of successful ACH transfers in real time. Thus, example embodiments may enable, through the introduction to technical means that can employ information exchanges that already exist or can exist to enhance the ability of the lender/transaction facilitator to use those technical means to identify when certain transactions involving card use that will be supported with ACH transfers can be supported in whole or in part with confidence that an NSF return can be avoided. Example embodiments therefore use technical means embedded into information exchange, to further enable technical computation or calculation that improves the entire process massively (e.g., by avoiding otherwise avoidable fees). This technical assistance to customers, which saves both them and the transaction facilitator money and reputation, may be game changing in terms of customer satisfaction while also driving increased sales volume, without a corresponding appreciable increase in risk. The user can therefore experience the benefits of continued positive (e.g., relationship enhancing) behaviors, and the card issuer/transaction facilitator can build a loyal customer base of satisfied card users by using technical means to leverage benefit to the customer.

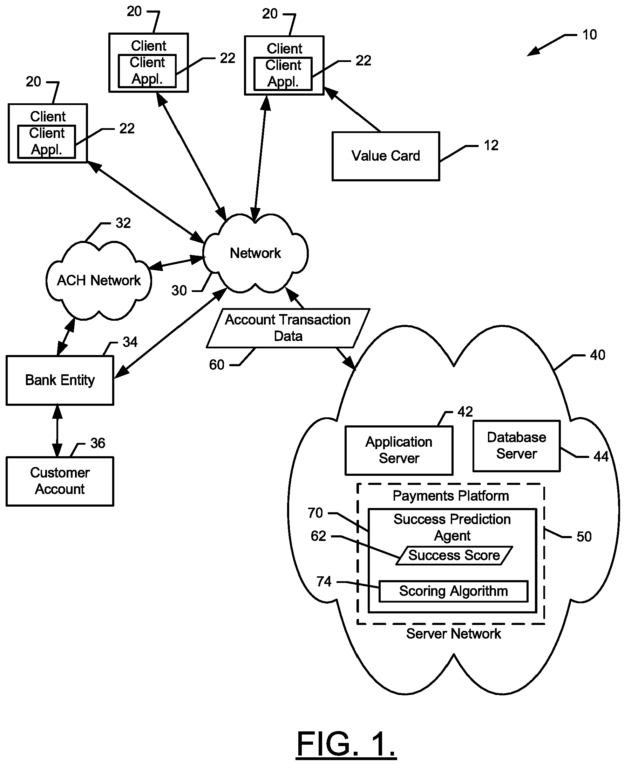

An example embodiment of the invention will now be described in reference to FIG. 1, which illustrates an example system in which an embodiment of the present invention may be employed. As shown in FIG. 1, a transaction management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement example embodiments. Thus, in some embodiments, one or more of the clients 20 may be associated with an organization (e.g., a merchant company) and may be located in different business units, branch offices, or other locations. In other cases, the clients 20 may be associated with individual users (i.e., customers) that may wish to interact with other clients 20 and/or a financial institution or entity. In general, the clients 20 may be terminals or platform entities that are capable of executing example embodiments, and there could be as few as one, or a host of such terminals or entities.

In one example use case, the client 20 may be a merchant terminal used to inform a payments platform 50 of a transaction initiated by a customer with the merchant via a value card 12 (e.g., a credit or debit card) issued by or serviced by the borrower or facilitator. In another example use case, the client 20 may be a cell phone or computer of the customer attempting to initiate a transaction online to purchase a good or service provided by the merchant, and the client application 22 may be a website of the merchant via which the customer provides the value card 12 or other payment method details to apply for credit from the borrower or facilitator via the payments platform. Example embodiments may, in some cases, specifically apply to financial transactions.

Thus, for example, in some cases each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, the network 30 may include or also be operably coupled to an automated clearing house (ACH) network 32 to which one or more instances of a bank entity 34 are also operably coupled. The bank entity 34 (or each of multiple such entities) may include various bank accounts associated with various customers. Such bank accounts may be referred to as customer accounts and customer account 36 in FIG. 1 is one such example of these customer accounts. As noted above, the customer may initiate a financial transaction to purchase a good or service of a merchant. For a debit purchase, the merchant (or customer) may inform the payments platform 50 (or transaction facilitation platform) of the desired transaction so that the customer can arrange the borrower/facilitator to transfer funds to the merchant on his/her behalf to obtain the good or service (e.g., from a for the benefit of (FBO) account of the borrower), and then arrange to transfer funds from the customer account 36 to borrower (facilitator). This transfer of funds from the customer account 36 may occur via the ACH network 32 by provision of an ACH file (or request) submitted by the facilitator to the bank entity 34. The bank entity 34 processes the ACH request and, if sufficient funds are available in the customer account 36, transfers money in the amount of the transaction from the customer account 36 to the facilitator.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to payments platform 50, and more particularly relating to facilitating financial computations and calculations related to decisions associated with extensions of credit (e.g., to cover financial transactions). For example, the application server 42 may be configured to provide (via the payments platform 50) execution of instructions, and storage of information descriptive of events or activities, associated with the payments platform 50 and the execution of a financial computations, calculations and modeling on behalf of a user of the system 10 located at one of the clients 20, or interacting with a user located at one of the clients 20, in real time.

In some cases, the financial transaction may include obtaining temporary funds transfer servicing associated with financial transactions, and the activities associated therewith may include the provision of a debit card or account number that can be used to facilitate financial transactions detailing information required by the facilitator (and operator of the payments platform 50) to determine whether credit, funds, or other products can be provided to the customer based on information provided. In some cases, the information provided may be provided by the customer. However, in others, the bank entity 34 may be contacted to determine a status of the customer account 36 (e.g., an account balance therein) to determine how much can safely be advanced on behalf of the customer to support financial transactions.

In some embodiments, the payments platform 50 may be a technical device, component or module affiliated with the lender or an agent of the lender. Thus, the payments platform 50 may operate under control of the lender or agent of the lender to be a technical means by which to carry out activities under direction of the lender/agent or employees thereof. The lender may, in some cases, be a facilitator of a transaction between the user (or customer) and a merchant, where such facilitation includes the advancement of funds, provision of a loan or extension of credit to the customer (thereby making the customer a borrower, and the facilitator a lender). The facilitator may, in effect, act via the operation of the payments platform 50 via configuration of various decision making components thereof. Thus, in some cases, the payments platform 50 may effectively act as a facilitation agent.

In some embodiments, the clients 20 may access the payments platform 50 services, and more particularly contact the payments platform 50 online and utilize the services provided thereby. However, it should be appreciated that in other embodiments, an application (e.g., the client application 22) enabling the clients 20 to interact with the payments platform 50 (or components thereof) may be provided from the application server 42 (e.g., via download over the network 30) to one or more of the clients 20 to enable recipient clients 20 to instantiate an instance of the client application 22 for local operation such that the payments platform 50 may be a distributor of software enabling individual users to utilize the payments platform 50. Alternatively, another distributor of the software may provide the client 20 with the client application 22, and the payments platform 50 may communicate with the client 20 (via the client application 22) after such download.

In an example embodiment, the client application 22 may therefore include application programming interfaces (APIs) and other web interfaces to enable the client 20 to conduct operations as described herein via the payments platform 50. The client application 22 may include a series of control consoles or web pages including a landing page, onboarding services, activity feed, account settings (e.g., user profile information), transaction management services, payment management services and the like in cooperation with a service application that may be executed at the payments platform 50. Thus, for example, the client application 22 may enable the user or operator to articulate and submit queries, make credit extension requests, initiate and pay for transactions using funds associated with a credit extension request, and/or the like using the payments platform 50.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the payments platform 50 configured to operate in accordance with an example embodiment of the present invention. In this regard, for example, the payments platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 (e.g., a computer including a user interface) via which individual operators or managers of the entity associated with the facilitation agent may interact with, configure or otherwise maintain the payments platform 50. Thus, it should be appreciated that the functions of the payments platform 50 can be conducted via client-server based interactions involving communications between clients 20 and the server network 40, or may be conducted locally at one of the clients 20 after an instance of the payments platform 50 is downloaded (e.g., via or as the client application 22) locally at the corresponding one of the clients 20.

As such, the environment of FIG. 1 illustrates an example in which provision of content and information associated with the financial industry may be accomplished by a particular entity (namely the payments platform 50 residing at the application server 42 or at one of the clients 20). Thus, the payments platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the payments platform 50 may operate to enable the user associated with a given one of the clients 20 to setup an account (i.e., a user account) with an entity (e.g., a lender or facilitator) that operates the payments platform 50 and that, in some cases, may issue, or partner with an issuer of, the value card 12 to the customer. After account setup, the user may initiate transactions with various merchants via a physical or virtual card supported by the entity in association with the user account. The user account may, in some cases, be linked to the customer account 36 to facilitate access by the facilitator to the customer account 36 in association with conducting financial transactions. In this context, for example, the amount of money in the customer account 36 may be used by the facilitator to determine if a financial transaction initiated by the user is approved or denied by the facilitator. If the transaction is approved, the facilitator may then initiate an ACH pull in order to be reimbursed from the funds in the customer account 36.

In a typical case, the facilitator may be enabled to get a report from the bank entity 34 as to the status of the customer account 36 periodically. For example, upon request or at various intervals, the facilitator may receive an account balance or other status information associated with the customer account 36. Obviously, the facilitator would not want to cover a transaction larger than the current account balance in the customer account 36. However, there remains the problem that the facilitator cannot know in real time what other transaction or money transfers are planned or already being processed that may add money into or take money from the customer account 36. Thus, the facilitator must appreciate that the account balance fluctuates.

In some cases, to account for this natural and normal fluctuation of the account balance of the customer account 36, the facilitator may place a predetermined transaction limit as a function of the account balance at any given time to define a limit to the exposure risk the facilitator is willing to accept. For example, the predetermined transaction limit may be 80% of the account balance at the time the account balance is checked (although any suitable value reflecting the risk tolerance of the facilitator may be chosen). In such a case, similar to the example discussed above, if the customer has $500 as the account balance in the customer account 36, the facilitator may allow the customer to conduct transactions supported by the facilitator in the amount of $400 (i.e., 80% of $500). If the customer employs the value card 12 (e.g., debit card) or otherwise attempts a transaction online in the amount of $300, the facilitator may approve the transaction and transfer funds to the corresponding merchant accordingly. The facilitator may also generate an ACH file to request transfer of $300 from the customer account 36 to the facilitator to cover or settle the transaction. However, as noted above, ACH transactions may take days to be completely resolved, and it is possible that the customer account 36 may have other transfers out scheduled ahead of the transaction which, if executed, may leave the customer account 36 short of funds when the ACH pull request arrives. Thus, for example, if another transaction or series of transactions were conducted before processing of the ACH request for $300, and the other transaction or series of transactions leave less than $300 remaining in the customer account 36, this situation would result in an insufficient funds notification (NSF return) being sent to the facilitator, and the facilitator would not receive (at least at this time) the money needed to settle the transaction.

In order to guard against this, particularly with respect to subsequent transactions the customer may attempt to engage in, the facilitator may request and/or receive more frequent account updates from the bank entity 34 than those necessitated by individual transactions or routine periodic checks. These more frequent account updates (e.g., status update information) may be provided in the form of account transaction data 60 as shown in FIG. 1. The facilitator may also utilize profile information or other local knowledge retained about the customer and/or the customer account 36, which may form part of the status update information, in some cases. Based on the status update information (e.g., the account transaction data 60 and any profile information or local knowledge), the payments platform 50 may determine a success score 62 for each attempted transaction (or candidate transaction) that is undertaken with the value card 12.

Example embodiments may accomplish this by employing a success prediction agent 70 that receives account transaction data 60 from the bank entity 34, and employs a scoring algorithm 72 described in greater detail below in order to determine whether a candidate transaction is likely to result in a successful withdrawal of funds from the customer account 36 in the amount of the candidate transaction and therefore avoid any NSF return. Thus, the success score 62 may be seen as a probabilistic representation of how unlikely the candidate transaction is to result in an NSF return (and conversely how likely the candidate transaction is to result in a successful ACH transfer). As can be appreciated from the descriptions above, the payments platform 50 may therefore desirably be upgraded by technical means to enable avoidance of NSF returns (or at least a reduction in frequency thereof), and corresponding fees, for both the customer and the facilitator.

In some example embodiments, the client application 22 may be used in connection with running queries, models, or calculations that are then used as the basis for interactions between the customer and merchants, and/or the lender/agent, or between decision makers within the organization in relation to services provided to customers, or policy decisions and budgeting that is to be done by the organization under control of the payments platform 50. In this regard, for example, the client application 22 may be used to engage (e.g., via a website and corresponding APIs) with the payments platform 50 to select individual products, financial transactions, loans, or types of loans to be evaluated using services associated with the payments platform 50. The payments platform 50 may prompt the client 20 to provide product or transaction details, or other information associated with the financial transaction that is being evaluated. In other words, the client 20 may provide a user interface function for interacting with the payments platform 50 to identify the information that will be evaluated using the payments platform 50.

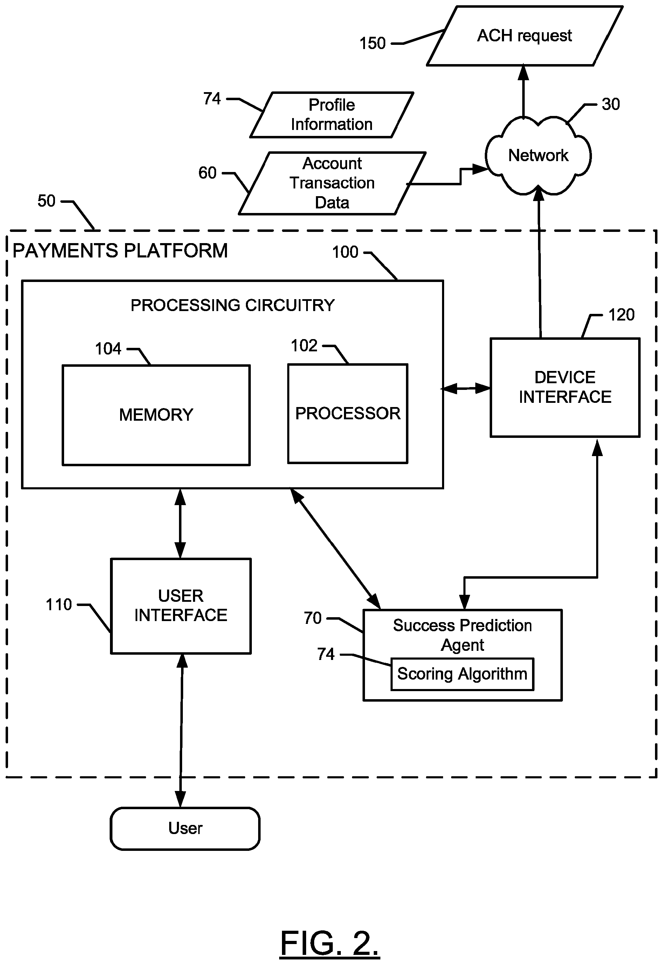

Regardless of how the queries, calculations or modeling activities are initiated, the payments platform 50 of FIG. 1 may be used to manage execution of such activities. Each of these activities may have its own respective timing and calculations and communications that are facilitated by the payments platform 50 and various components of the payments platform 50 may be conducted in parallel. The components, which may be functional modules that operate via API or function calls to respective segmented platforms or a monolith or other collection of rules, policies, instructions, or the like. In an example embodiment, the payments platform 50 may include (or be operably coupled to) one or both of the success prediction agent 70 and the scoring algorithm 74. Some of the structures and operations associated with the success prediction agent 70 and the scoring algorithm 74 of an example embodiment will be described in reference to FIG. 2.

FIG. 2 shows certain elements of an apparatus for provision of the payments platform 50 or other processing circuitry according to an example embodiment. The apparatus of FIG. 2 may be employed, for example, as the payments platform 50 operating at, for example, a network device, server, proxy, or the like (e.g., the application server 42 or client 20 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42 or the client 20) or by devices in a client/server relationship (e.g., the application server 42 and one or more clients 20). Thus, although FIG. 2 illustrates the payments platform 50 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating decision making regarding support for financial transactions (e.g., credit, debit, etc.) supported by the technical improvements of an example embodiment is shown. In this regard, the payments platform 50 may be configured to perform analysis, modeling, or other determinations based on the signaling and/or the information provided to determine whether to facilitate a financial transaction on behalf of a customer and, if so, conduct the corresponding transfers of money needed to do so. The apparatus may be an embodiment of the payments platform 50 or a device or component thereof including, for example, the success prediction agent 70. As such, configuration of the apparatus as described herein may transform the apparatus into the payments platform 50. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In some embodiments, the processor 102 may be embodied as a central processing unit (CPU) or a graphics processing unit (GPU). In situations where the processing circuitry 100 is embodied as a server or at a remotely located computing device, the user interface 110 may be disposed at another device (e.g., at a computer terminal) that may be in communication with the processing circuitry 100 via the device interface 120 and/or a network (e.g., network 30). Thus, in some cases, the connection of the user to the user interface 110 may actually occur via the network 30.

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the payments platform 50 and/or the success prediction agent 70, each of which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the payments platform 50, the success prediction agent 70 as described below.

The success prediction agent 70 may be configured to include tools to facilitate execution of the respective functions described herein. The tools may be provided in the form of various modules (or submodules) that may be instantiated by configuration of the processing circuitry 100. Thus, for example, the success prediction agent 70 may include tables, logs or the like for storing data to be evaluated, algorithms (e.g., the scoring algorithm 74) and/or the like that can operate on data to be evaluated, and various execution modules specifically configured to manipulate data and/or provide for the transmission and/or reception of messages or instructions needed to carry out respective functions of the success prediction agent 70 as described herein based on inputs received. The inputs may include many different signals that may be used to balance risks associated with extending credit to a user (e.g., supporting a financial transaction). These signals may include identity information indicating an identity of the user (or the user's account), entity information that identifies the facilitator (or other entity facilitating a financial transaction), date information, information indicating an amount of a transaction, and an identification of merchant or even product in some cases. However, numerous other signals associated with other information may also be included.

In an example embodiment, the success prediction agent 70 may be configured perform actions associated with avoiding (or reducing the likelihood of) NSF returns. In this regard, for example, the success prediction agent 70 may be configured to calculate (e.g., via the scoring algorithm 74) a success score 62 that is predictive of the likelihood of success in avoiding the NSF return. As can be appreciated from this description, predicting a likelihood of success in avoiding an NSF return is merely complementary to predicting a likelihood of failure to avoid the NSF return. Thus, the success score 62 is merely the inverse of what could otherwise be considered to be a likelihood of getting an NSF return. Accordingly, example embodiments could equally operate using this inverse likelihood score, if calculated as an alternative to the success score 62. As such, the success score 62 described herein should be considered to be equally representative of both paradigms. As noted above, the success score 62 may be seen as a probabilistic representation of how unlikely a given transaction (e.g., a financial transaction) is to result in an NSF return.

In cases where real time data was known with certainty, and the ACH network operated with immediacy, the probability of avoiding an NSF return would be 100% if the account balance of the customer account 36 was greater than the amount of the financial transaction, and would be 0% if the account balance of the customer account 36 was less than the amount of the financial transaction. However, such certainty is not possible on either of those accounts. As such, the success score 62 must be calculated to take into account these uncertainties. In an example embodiment, in addition to the normal bank account status checks that occur periodically or in response to transactions, the facilitator may request and/or receive additional account activity information (e.g., status update information) in the form of the account transaction data 60 mentioned above, and profile information known or learned about the customer.

In an example embodiment, the account balance associated with the customer account 36 when a status check was last performed may be modified to generate an estimated account balance based on a number of factors. The estimated account balance may itself be a probabilistic estimate of the most likely account balance that can be guessed or assumed to exist when the ACH request 150 that is generated for a given financial transaction is actually processed by the ACH network 32. If the estimated account balance is higher than the financial transaction, the probability of avoiding an NSF return may be above a threshold amount necessary to approve the transaction. Of course, the greater the amount by which the estimated account balance exceeds the amount of the financial transaction, the higher the probability of success in avoiding the ACH return, and the higher the success score 62. The scoring algorithm 74 may be programmed to determine or scale the success score 62 over a range of probabilities based on past experience and learned experience over time. Moreover, the estimated account balance may also account for other known or knowable information (e.g., status update information), as described in greater detail below.

The account transaction data 60 for any given account may be stored and/or analyzed by the success prediction agent 70 over time to attempt to identify patterns or learn other information about the habits, activities or schedules of various customers and owners of respective bank accounts (and value cards and respective user accounts). Moreover, in some cases, the success prediction agent 70 may employ a machine learning module configured to employ machine learning in order to learn such patterns and information. In an example embodiment, information learned about a customer (or users or a user of the customer account 36 and value card 12) may be stored in a user or customer profile associated with the customer account 36, and may be used by the success prediction agent 70 and scoring algorithm 74 to calculate the success score 62. Alternatively or additionally, the success prediction agent 70 may be configured to partition the amount of the financial transaction into smaller chunks that could be subject to corresponding separate ACH requests that are staggered in time in order to increase the likelihood of success (and increase corresponding success scores).

In an example embodiment, if the customer account 36 typically receives deposits, perhaps even of known amounts, on a given pattern of days each month or week (e.g., payday for the customer), the success prediction agent 70 may be capable of inferring or detecting this pattern, and may consider it in the determinations described herein. Thus, for example, the estimated account balance may be determined in light of this information. As such, again by way of example, if the customer uses the value card 12 to initiate a transaction for $200 on a Wednesday before a Friday that is known to be a payday for the customer in which a deposit of $500 is expected, such information may be used in connection with calculating the success score 62 along with a temporal association for the success score 62. If the account balance for the customer account is $100, the financial transaction would normally be denied. However, an immediate success score may be calculated with a very low success score, but a deferred success score (with a 48 hour delay installed) may have a very high success score.

As another example, the scoring algorithm 74 may calculate multiple partial success scores to consider the success score for various scenarios in which smaller ACH request amounts are involved. For example, if the customer uses the value card 12 to initiate a transaction for $200. The scoring algorithm 74 may generate a success score for the full amount of the financial transaction (i.e., $200), and if the account balance for the customer account 36 is $100, the success score 62 would be likely to be lower than a threshold success score required for approval of the transaction. However, the scoring algorithm 74 may also calculate a 25% success score (which would be much higher than the threshold success score), a 50% success score (which may be very close to the threshold success score) and a 75% success score (which may also be below the threshold success score in this example). Given the high success score at 25%, the success prediction agent 70 may provide an instruction to approve the transaction, but only generate an ACH request for 25% of the amount of the financial transaction (i.e., $50) immediately, and defer instruction for generation of the ACH request(s) for the remainder (i.e., $150) until a later time. The deferral instruction may be date specific (e.g., based on the pattern information discussed above to anticipate a deposit on a given date), or may simply cause additional success scores to be calculated each day (or at some other periodic interval) in which an additional deferral is provided until the full amount can be ACH requested via portions that are above the threshold success score.

As such, the scoring algorithm 74 may, in some cases, calculate a success score that suggests approval of the transaction, but delay in generation of the ACH request 150 until the NSF return likelihood declines (e.g., due to the expected arrival of an intervening deposit at some time before expiry of a delay period), or suggests partitioning ACH requests and delaying them in sequence to maximize likelihood of success. In some cases, the time delay (or deferral) and/or the partitioning of the ACH requests may only be utilized responsive to an initial calculation of the success score 62 that is below the threshold success score. This may reduce computational loading on the system, and speed operation of the system consequently. However, in other cases, particularly where computing power is very high, or time delays are not impactful, either or both of success scores considering temporal adjustments and partitioning may also be computed as options initially. In such examples, the success prediction agent 70 may be configured to instruct (or suggest) approval of the transaction for one of the options that is above the threshold success score, but provides for the highest ACH request amount. In other words, for any case where the full payment has a success score above the threshold success score, such full payment would determine the amount of the ACH request 150 even though all partial amounts are also above the threshold success score. Similarly, if 100% and 75% partitions generate a success score below the threshold success score, but 50% and 25% partitions are above the threshold success score, then the 50% partition may be relied upon for generation of the first ACH request in the series of such requests aimed at recovering the full amount of the financial transaction while avoiding any NSF returns in the process.

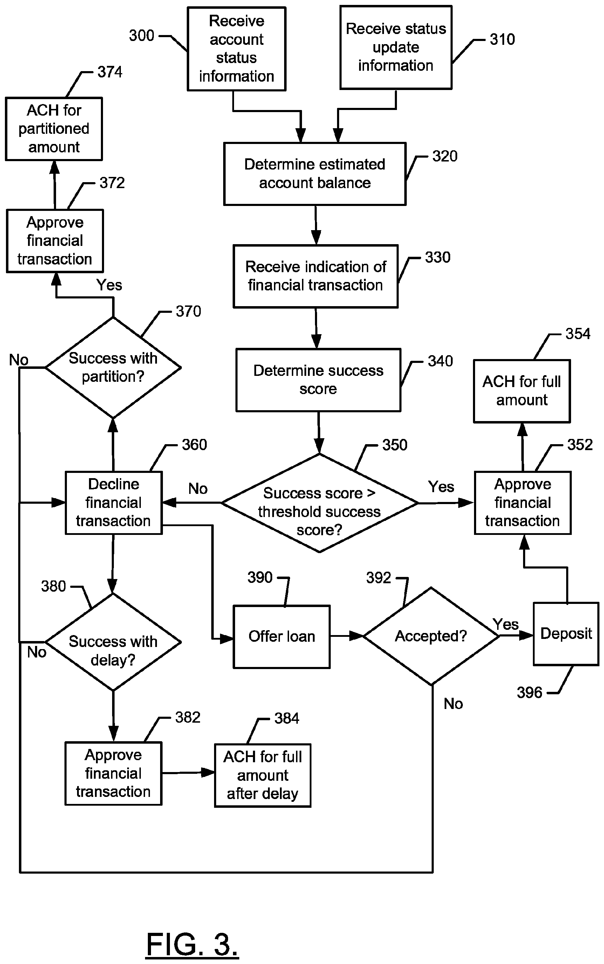

FIG. 3 illustrates a block diagram showing control flow associated with operation of the payments platform 50 in accordance with an example embodiment. As shown in FIG. 3, the payments platform 50 may receive account status information at operation 300. In parallel, before or after operation 300, the payments platform 50 may also receive status update information (e.g., account transaction data 60 and/or profile information) at operation 310. Thereafter, at operation 320, an estimated account balance may be determined based on the status update information (e.g., as a modification to the originally received account status from operation 300). An indication of a financial transaction may then be received at operation 330. A success score may be determined for the financial transaction at operation 340.

A determination may then be made at operation 350 as to whether to approve the financial transaction based on the success score. As noted above, this determination may be based on a comparison of the estimated account balance to the amount of the financial transaction. If the estimated account balance is greater than the amount of the financial transaction, or the success score is greater than a threshold success score (the former of which conditions may be a cause for the latter, or each of which conditions may be equivalent to each other), the financial transaction may be approved at operation 352, and an ACH request for the full amount of the financial transaction may be issued at operation 354.

However, if the estimated account balance is less than the amount of the financial transaction, or the success score is lower than a threshold success score, the financial transaction may be declined or denied at operation 360. As an alternative (or as a result) of the decline at operation 360, a determination may be made at operation 370 as to whether partitioning the amount of the financial transaction and determining success scores for the portions thereof results in any portion having a success score greater than the threshold success score. If yes, the financial transaction may be approved at operation 372, and an ACH request for the partitioned amount of the financial transaction may be issued at operation 374. If not, the financial transaction may be declined at operation 360.

As another alternative (or result) of the decline at operation 370, a determination may be made at operation 380 as to whether delaying the ACH request for a period of time and determining a future estimated success score at a delayed future time results in a success score greater than the threshold success score at such time. If yes, the financial transaction may be approved at operation 382, and an ACH request for the full amount of the financial transaction may be issued at the delayed time at operation 384. If not, the financial transaction may be declined at operation 370.

As another alternative (or result) of the decline at operation 370, a loan offer may be made to the customer at operation 390. A determination may then be made at operation 392 as to whether the offer is accepted. If not accepted, the financial transaction may be declined at operation 360. If accepted, a deposit may be made into the customer account 36 at operation 396, the financial transaction may be approved at operation 352, and an ACH request for the full amount of the financial transaction may be issued at operation 354. Notably, the paths through operations 370, 380 and/or 390 may be alternatives in some cases, but may be combined in others. Thus, partition and delay, partition and a loan, delay and a loan, or partition, delay and a loan may all be included in some embodiments.

Notably, the process demonstrated in FIG. 3 may appear to suggest that only a single account balance check may ever occur (e.g., at operation 320). However, that is not necessarily the case. Indeed multiple account checks may occur in some embodiments. For example, a first credit check may occur when the facilitator is determining whether to approve a transaction (e.g., at operation 320), and then, at some predetermined later time (e.g., after a specifically chosen delay period of, for example, 24-72 hours) a second account check may be made to predict whether the ACH pull to cover the transaction should be done in one or multiple different requests (e.g., at some predicted intervals). This second account balance check may further serve to minimize the chances of getting an insufficient funds return, and may also facilitate determining whether ACH requests should be partitioned as described in greater detail above.

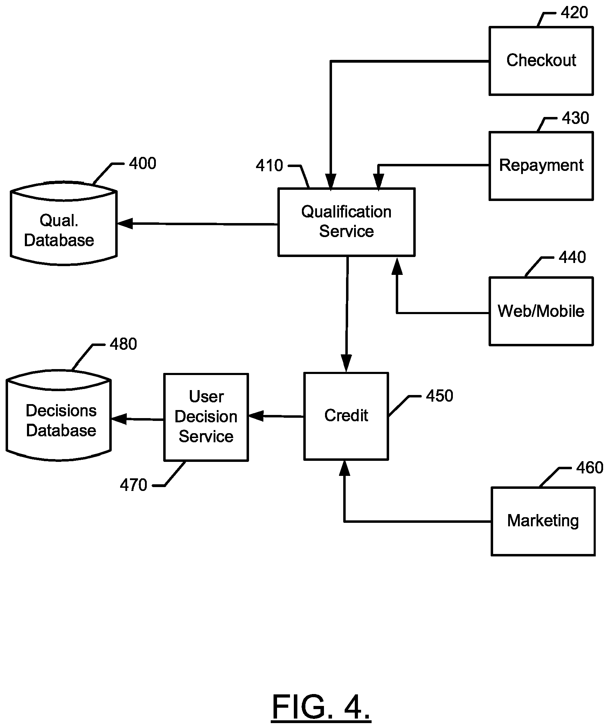

The method of FIG. 3 and the hardware described in reference to FIG. 2 are merely examples of methods and hardware that could be employed to implement example embodiments. Moreover, in some cases, various services or systems may cooperate to practice example embodiments, and different combinations of hardware and software may be employed to implement such services and systems. FIG. 4 is a block diagram of various systems interactions that may be employed to implement an early capture capability in accordance with an example embodiment.

As shown in FIG. 4, a qualification database 400 may store information associated with qualification of a plurality of users, each having a corresponding user account setup and maintained as described above. In an example embodiment, the qualification database 400 may be a portion of the database server 44 of FIG. 1, or implemented in memory 104 of FIG. 2. A qualification service 410 may interface with and update the qualification database 400. The qualification service 410 may be implemented from the payments platform 50.

Checkout information may be provided to the qualification service 410 by various checkout systems 420 associated with respective different vendors or websites. Repayment information may also be provided to the qualification service 410 by various repayment systems 430 associated with respective different vendors or websites. Web or mobile devices 440 may be examples of clients 20 that may interact with the qualification service 410 to setup user accounts and to initiate transactions (via the checkout systems 420) or may payments (via the repayment systems 430).

Credit system 450 may be employed to make credit extension decisions based on information from the qualification service 410, and to augment (or boost) credit limits based on marketing information from a marketing system 460, which may indicate when particular boosts, enhancements, or incentives for various merchants are applicable. A user decision service 470 may be used to consider early capture as described above in reference to operations 300 to 396 in FIG. 3. All information resulting from these decisions may be recorded in decisions database 480.

As can be appreciated from the description above, while the user may simply be declined by a typical facilitator, when armed with technical means provided by example embodiments, the user may be informed of options (e.g., the loan option) to secure transaction approval when it might otherwise be declined. Moreover, the facilitator can set the system up to approve many transactions that might otherwise have been declined by recovering at least a partial amount of the transaction early on, and working for the remainder later, or by intelligently delaying the ACH request to avoid the NSF return. The facilitator can also (e.g., via the user interface 110) adjust the success score threshold to any desirable value to take on more or less risk. Moreover, as noted above, the machine learning module may improve the performance of the system over time by learning better pattern recognition to predict when accounts can successfully avoid NSF returns when the ACH request is sent (for a selected amount or at a selected future time). Such minimization of changes that NSF returns are experienced for financial transactions may incentivize the user to continue to exhibit behaviors that lead to increases in user satisfaction, and brand loyalty while also increasing volume of transactions for the facilitator without an appreciable increase in risk. The corresponding incentives and rewards may ultimately provide a technical means by which to create a win/win relationship between the entity and the user.

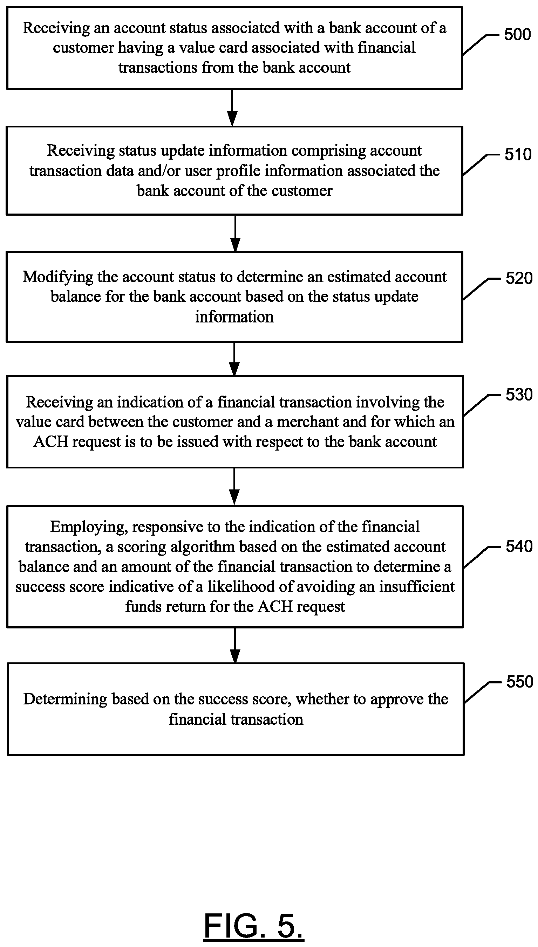

From a technical perspective, the payments platform 50 described above may be used to support some or all of the operations described above. As such, the apparatuses described in FIGS. 2 and 4 may be used to facilitate the implementation of several computer program and/or network communication based interactions. As an example, FIG. 5 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method for facilitating minimization of insufficient funds returns for automated clearing house (ACH) transfers associated with transactions according to one embodiment of the invention is shown in FIG. 5. The method may be performed by a facilitation agent at a server, computer or other processing circuitry associated with a facilitator. The method may include receiving an account status associated with a bank account of a customer having a value card associated with financial transactions from the bank account at operation 500 and receiving status update information including account transaction data and/or user profile information associated the bank account of the customer operation 510. The method may further include modifying the account status to determine an estimated account balance for the bank account based on the status update information at operation 520 and receiving an indication of a financial transaction involving the value card between the customer and a merchant and for which an ACH request is to be issued with respect to the bank account at operation 530. The method may also include employing, responsive to the indication of the financial transaction, a scoring algorithm based on the estimated account balance and an amount of the financial transaction to determine a success score indicative of a likelihood of avoiding an insufficient funds return for the ACH request at operation 540, and determining based on the success score whether to approve the financial transaction at operation 550.

In an example embodiment, an apparatus for performing the method of FIG. 5 above may comprise a processor (e.g., the processor 102) or processing circuitry configured to perform some or each of the operations (500-550) described above. The processor may, for example, be configured to perform the operations (500-550) by performing hardware implemented logical functions, executing stored instructions, or executing algorithms for performing each of the operations. In some embodiments, the processor or processing circuitry may be further configured for additional operations or optional modifications to operations 500 to 550.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, determining whether to approve the transaction may include, approving the financial transaction responsive to the success score being above a threshold success score. Alternatively or additionally, determining whether to approve the transaction may include, denying the financial transaction responsive to the success score being below the threshold success score. As yet another alternative or addition, determining whether to approve the transaction may include, approving the financial transaction responsive to the success score being below the threshold success score, but a partial success score associated with a portion of the amount of the financial transaction being above the threshold success score. In an example embodiment, the method may further include generating the ACH request for the portion of the amount of the financial transaction and deferring generation of a second ACH request for a remainder of the amount of the financial transaction to a later time. In some cases, the method may further include, responsive to approving the financial transaction, generating the ACH request for all of the amount of the financial transaction. In an example embodiment, determining whether to approve the transaction may include, approving the financial transaction responsive to the success score being below the threshold success score, and delaying generation of the ACH request until a later time at which a recalculation of the success score is above the threshold success score. In some cases, the later time may be determined based on profile information of the customer where the profile information defines a pattern of expected deposits into the bank account. In an example embodiment, the method may further include communicating a message to a communication device of the customer to offer a loan to the customer responsive to the success score being below the threshold success score. In such an example, the method may also include receiving an offer acceptance message from the customer indicating customer accepting the offer and, responsive to the customer accepting the offer, adding an amount of the loan to the bank account and approving the financial transaction.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for facilitating minimization of insufficient funds returns for automated clearing house (ACH) transfers associated with transactions, the method comprising:
receiving, by a facilitation agent, an account status associated with a bank account of a customer having a value card associated with financial transactions from the bank account;
receiving, by the facilitation agent, status update information comprising account transaction data and/or user profile information associated the bank account of the customer;
modifying, by the facilitation agent, the account status to determine an estimated account balance for the bank account based on the status update information;
receiving, by the facilitation agent, an indication of a financial transaction involving the value card between the customer and a merchant and for which an ACH request is to be issued with respect to the bank account;
employing, by the facilitation agent, and responsive to the indication of the financial transaction, a scoring algorithm based on the estimated account balance and an amount of the financial transaction to determine a success score indicative of a likelihood of avoiding an insufficient funds return for the ACH request; and
determining, by the facilitation agent, and based on the success score, whether to approve the financial transaction.

2. The method of claim 1, wherein determining whether to approve the transaction comprises, approving the financial transaction responsive to the success score being above a threshold success score.

3. The method of claim 2, wherein determining whether to approve the transaction comprises, denying the financial transaction responsive to the success score being below the threshold success score.

4. The method of claim 2, wherein determining whether to approve the transaction comprises, approving the financial transaction responsive to the success score being below the threshold success score, but a partial success score associated with a portion of the amount of the financial transaction being above the threshold success score.

5. The method of claim 4, further comprising generating the ACH request for the portion of the amount of the financial transaction and deferring generation of a second ACH request for a remainder of the amount of the financial transaction to a later time.

6. The method of claim 2, further comprising, responsive to approving the financial transaction, generating the ACH request for all of the amount of the financial transaction.

7. The method of claim 2, wherein determining whether to approve the transaction comprises, approving the financial transaction responsive to the success score being below the threshold success score, and delaying generation of the ACH request until a later time at which a recalculation of the success score is above the threshold success score.

8. The method of claim 7, wherein the later time is determined based on profile information of the customer, the profile information defining a pattern of expected deposits into the bank account.

9. The method of claim 1, further comprising communicating a message to a communication device of the customer to offer a loan to the customer responsive to the success score being below the threshold success score.

10. The method of claim 8, further comprising receiving an offer acceptance message from the customer indicating customer accepting the offer, and
wherein, responsive to the customer accepting the offer, an amount of the loan is added to the bank account and the financial transaction is approved.

11. An apparatus for facilitating minimization of insufficient funds returns for automated clearing house (ACH) transfers associated with transactions, the apparatus comprising processing circuitry configured to perform the method of any of claims 1-10.
